# FASCICULE DE BREVET EUROPEEN

(11) **EP 0 494 837 B1**
(45) Date de publication et mention de la délivrance du brevet: **05.04.1995**
(21) Numéro de dépôt: 92420008.2
(22) Date de dépôt: 08.01.1992
(51) Int. Cl.: C01B 33/02

(54) **Poudre de silicium métallurgique à faible oxydation superficielle**
Metallurgisches Siliziumpulver mit einer geringen oberflächlichen Oxydation
Metallurgic silicon powder with a small superficial oxidation

(30) Priorité: 11.01.1991 FR 9100532
(43) Date de publication de la demande: 15.07.1992
(73) Titulaire: PECHINEY ELECTROMETALLURGIE, 92400 Courbevoie (FR)
(72) Inventeur: Dubrous, Francis, F-74700 Sallanches (FR)
(74) Mandataire: Mougeot, Jean-Claude

(56) Documents cités:
- DE-A- 3 428 255
- DE-A- 3 811 091

## Description

### DOMAINE TECHNIQUE

L'invention concerne une poudre de silicium d'origine métallurgique présentant une très faible oxydation de surface ainsi que les moyens de préparer et de conserver ce produit.

### ETAT DE LA TECHNIQUE

Le silicium métallurgique est généralement obtenu par réduction de la silice par le carbone au four électrique à arc submergé. Le silicium produit à l 'état liquide est alors coulé en lingots dont la masse peut varier de 10 kg à 1000 kg. Après solidification et refroidisesement, les lingots peuvent être concassés, puis broyés en poudre.

Les broyeurs travaillent le plus souvent à l'air. Toutefois, pour des raisons de sécurité, on peut placer les broyeurs sous atmosphère appauvrie en oxygène, par exemple 5 à 10% de O₂; en effet le mélange d'air et de silicium en poudre présent dans les broyeurs peut faire encourir des risques d'explosion.

Pour éviter le broyage, on peut atomiser le silicium liquide et obtenir directement une poudre constituée de particules grossièrement sphériques. Cette technique permet également de diminuer l'importance des fractions granulométriques les plus fines et d'assurer une solidification très rapide du silicium pour favoriser des structures cristallines particulières.

Ces différentes techniques permettent d'obtenir divers types de silicium se distinguant par leur structure cristalline qui dépend de la vitesse de solidification et de refroidissement utilisée. On peut également obtenir divers types de silicium en jouant sur les teneurs en impuretés et/ou en éléments alliés introduits en faible quantité.

Si la technique de préparation ainsi que la composition permettent d'obtenir des nuances de silicium adaptées à l'usage envisagé, il apparaît que l'on note toujours une oxydation superficielle sur les particules constituant la poudre dudit Si. Cette oxydation se présente sous la forme d'une pellicule de silice recouvrant la totalité de la surface desdites particules; son épaisseur est en général comprise entre 3 et 5 nm (30 et 50 Å), et pratiquement jamais inférieure à 3 nm (30 Å). Il peut arriver que tout à fait occasionnellement on arrive parfois à mesurer des épaisseurs de silice inférieure à 3 nm (30 Å), mais les procédés d'obtention de poudres de Si évoqués plus haut ne permettent pas d'obtenir de façon régulière et reproductible de telles poudres peu oxydées, ni de fournir de garantie sur leur état de surface.

Dans ses applications, le silicium métallurgique est mis souvent en oeuvre en tant que matière première dans des réactions hétérogènes, par exemple en présence d'un gaz comme le chlorure de méthyle pour la fabrication du dichlorosilane en vue de l'obtention de silicones, ou encore en présence d'un liquide comme l'aluminium fondu pour la fabrication d'alliage du type Al-Si.

La demanderesse a alors supposé que quelle que soit son utilisation, un silicium à très basse teneur superficielle en oxygène était souhaitable. Par exemple dans le cas de la fabrication des silicones la couche de silice qui recouvre les grains de silicium ne pouvait que constituer une barrière chimique ralentissant les réactions avec le chlorure de méthyle; dans le cas de la fabrication des alliages Al-Si cette couche de silice ne pouvait qu'être réduite par l'aluminium en donnant de l'alumine qui ne pouvait que conduire à des inclusions dans l'alliage final.

Pour vérifier cela et les conséquences de cette couche de silice sur les propriétés du silicium, la demanderesse a donc recherché comment parvenir à un silicium en poudre sur lequel puisse être garantie une oxydation superficielle très faible significativement inférieure aux valeurs constatées sur les produits de l'art antérieur.

### DESCRIPTION DE L'INVENTION

L'invention est une poudre de silicium métallurgique ou d'alliage à base de silicium métallurgique présentant une faible oxydation superficielle caractérisée en ce que les particules constitutives de la poudre sont recouvertes d'une couche de silice superficielle d'une épaisseur d'au plus 2 nm (20 Å).

On constate de façon inattendue que la très faible couche de silice de l'invention s'avère le paramètre déterminant qui permet d'améliorer nettement les performances du silicium dans ses applications: principalement la fabrication du diméthyldichlorosilane par réaction du chlorure de méthyle gazeux sur le silicium, première étape de la synthèse des silicones, mais aussi la fabrication d'alliage Al/Si par addition de Si dans Al fondu. Les paramètres antérieurement connus (en particulier la structure cristalline, la teneur en autres éléments) conservent certes une importance mais elle est moins marquante que celle due à la couche de silice de l'invention comme le montre les résultats de l'exemple 2.

Les meilleurs résultats ont été obtenus avec une couche de silice non nulle, typiquement comprise entre environ 1 et 2 nm (10 et 20 Å); une couche d'oxyde inférieure à 1 nm (10 Å) se montre moins performante.

Il apparaît que ce n'est pas la teneur globale en oxygène du silicium qui importe (par exemple mesurée en ppm d'oxygène par rapport au silicium total), mais bien l'épaisseur de la couche superficielle de SiO₂, ou la teneur superficielle en oxygène, qui conditionne les performances du silicium, en particulier sa vitesse de réaction avec le chlorure de méthyle.

Les poudres de silicium de l'invention peuvent être constituées de grains de tailles très variées de 0 à 30 mm; elles présentent un intérêt majeur dans le cas des poudres fines constituées de particules de taille inférieure à 350 »m, les poudres les plus fines étant les plus sensibles à l'oxydation.

L'épaisseur de la couche d'oxyde superficiel est mesurée par application de la méthode de spectroscopie d'électron Auger; celle-ci permet d'obtenir l'analyse d'une couche superficielle d'épaisseur de l'ordre de quelques nm. L'échantillon sur lequel on veut déterminer l'épaisseur de la couche superficielle est soumis à des analyses successives par spectroscopie Auger au cours d'un décapage ionique qui élimine progressivement la couche d'oxyde; les analyses successives permettent d'obtenir un profil de concentration en oxygène en connaissant la vitesse d'érosion. La vitesse d'érosion est déterminée par la mesure de la profondeur du cratère final (Talystep) ou à la suite d'un étalonnage par mesure d'un profil de concentration parfaitement connu d'isotope O₁₅ obtenu par implantation.

On peut obtenir les particules de silicium métallurgique selon l'invention en partant de lingots de silicium métallurgique, préalablement coulés de préférence à l'abri de l'air, concassés jusqu'à 30 mm; les morceaux obtenus sont ensuite broyés à température ambiante sous atmosphère peu réactive, en ajoutant pendant le broyage une huile permettant de recouvrir et protéger dès leur apparition les surfaces neuves générées par le broyage.

Un mélange d'azote et d' air ne contenant pas plus de 8% d'oxygène, qui suffit à écarter les risques d'explosion dans les broyeurs, suffit également à obtenir une poudre de Si selon l'invention après avoir ajouté bien sûr l'huile lors du broyage ; l'azote pur, ou techniquement pur, peut également convenir mais ne dispense pas d'ajouter l'huile lors du broyage. L'huile peut être un hydrocarbure du type alcane, un ester ou un corps gras, ou mieux une huile de silicone. La quantité ajoutée est en général comprise entre 0,1 et 0,5% et de préférence entre 0,1 et 0,3% (en poids).

On peut également obtenir les poudres de silicium selon l'invention à partir de silicium métallurgique liquide par atomisation sous vide ou dans un gaz peu réactif sous pression réduite, par exemple l'azote ou l'argon à pression réduite, inférieure à la pression atmosphérique. Dans le cas de l'azote, la quantité de nitrure formée en surface des particules, est extrêmement faible et le peu de nitrure ainsi généré a l'avantage de ne pas former de pellicule unie et continue comme le fait la silice.

Les particules obtenues sont ensuite stockées et conservées à l'ambiante, de préférence sous atmosphère protectrice (azote, argon, vide). En effet leur remise à l'air entraîne une lente réoxydation superficielle freinée par le film d'huile et donc leur transformation en un produit hors spécifications.

Le silicium métallurgique est élaboré suivant les techniques connues: carbothermie au four à arc submergé puis traitement d'affinage en poche avec mise à la nuance; sa composition typique est la suivante:
Fe ≦ 0,40%
Ca ≦ 0,20%
Al ≦ 0,20%
Si ≧ 98%.

Mais l'invention s'applique également aux alliages à base de Si, notamment ceux utilisés dans la fabrication des silicones et contenant par exemple au moins l'un des éléments Fe, Al, Ca ou Cu, en particulier ceux contenant du Cu, par exemple entre 1 et 8%.

### EXEMPLES

### Exemple 1

Cet exemple illustre l'obtention d'une poudre de silicium selon l'invention.

Avec une poche de 2t de Si liquide on coule quatre lingots d'environ 500 kg chacun dans des lingotières à couvercle mobile pour éviter le contact du métal liquide avec l'air.

Les lingots sont concassés grossièrement puis introduits dans un broyeur à barres balayé par un courant gazeux constitué d'un mélange d'air et d'azote contenant 8% d'oxygène. On y ajoute 0,3% (en poids) d'huile de silicone liquide.
Le produit broyé obtenu passe entièrement au tamis de 250 »m et est stocké en sac sous atmosphère d'Ar.

L'épaisseur de la couche de silice a été mesurée par spectroscopie d'électron Auger.
Elle mesure 1,2 nm (12 Å) .

A titre de comparaison, une nouvelle charge a été broyée sans addition d'huile dans le broyeur, mais en conservant les autres conditions opératoires.

Sur la poudre de silicium ainsi obtenue on a mesuré une épaisseur de couche de silice de 3,5 nm (35 Å).

### Exemple 2

Dans cet exemple on a comparé le comportement de différentes poudres de Si dans leur réaction avec le chlorure de méthyle pour obtenir du diméthyldichlorosilane mélangé aux autres produits de la réaction.
Pour cela, dans chaque essai le silicium à tester a été placé au fond d'un réacteur, de diamètre intérieur 35 mm, sur un verre fritté au travers duquel on a envoyé un courant du chlorure de méthyle gazeux obtenu par volatilisation d'un débit de 7,83 g/h de chlorure de méthyle liquide. La réaction a été conduite à 300°C sous pression de 2 atm, le réacteur étant purgé d'air par balayage d'argon avant chaque opération. Les essais ont été réalisés avec 50 g de poudre de silicium comprise entre 50-160 »m mélangée, à chaque fois, avec 3 g de poudre de cuivre atomisée de même granulométrie.

A chaque essai, on a noté la vitesse (v) de réaction, définie par le rapport de la masse de Si ayant réagi pendant une durée déterminée sur la masse de Si de départ, ainsi que le taux (x) de diméthyldichlorosilane mélangé aux autres produits de la réaction
Les conditions d'obtention de la poudre de silicium et les résultats sont donnés dans le tableau suivant:

**TABLEAU 1**

| N° Essai | Obtention de la poudre de Si | épaiss. de la couche de SiO2 nm | Principales impuretés | | | Vitesse (v) % | Taux de diméthyl dichloro silane(x % |
|---|---|---|---|---|---|---|---|
| | | | Ca % | AL % | Fe % | | |
| Art antérieur | | | | | | | |
| 1 | Si broyé à l'air (broyeur à barres) | 4,5 | 0,08 | 0,21 | 0,37 | 70 | 85 |
| 2 | Si coulé en granulé dans eau, puis broyé à l'air | 5,5 | 0,12 | 0,19 | 0,34 | 72 | 83 |

| Invention | | | | | | | |
|---|---|---|---|---|---|---|---|
| 3 | Si broyé sous atmosphère d'argon (broyeur à barres) avec 0,3% d'huile de silicone | 1,2 | 0,08 | 0,21 | 0,39 | 88 | 86 |
| 4 | Si atomisé dans azote à pression réduite (350 mm de Hg) | 1,0 | 0,08 | 0,21 | 0,39 | 90 | 81 |
| 5 | Si atomisé dans argon à pression réduite (350 mm de Hg) | 0,5 | 0,08 | 0,21 | 0,39 | 77 | 80 |

On voit qu'avec une couche de silice de faible épaisseur selon l'invention, la vitesse de réaction augmente notablement (gain de 25%), sans altérer le taux d'obtention de diméthyldichlorosilane. On voit également (essai 2) qu'une trempe très énergique du silicium n'améliore pas de façon très significative les propriétés du silicium, en comparaison de l'effet d'une mince couche d'oxyde.

## Revendications

1. Poudre de silicium métallurgique ou d'alliage à base de silicium métallurgique présentant une faible oxydation superficielle caractérisée en ce que les particules constitutives de ladite poudre sont recouvertes d'une couche de silice superficielle d'au plus 2 nm (20 Å) d'épaisseur.

2. Poudre selon la revendication 1 caractérisé en ce que la couche de silice superficielle a une épaisseur comprise entre 1 et 2 nm (10 et 20 Å).

3. Poudre selon l'une quelconque des revendications 1 ou 2 caractérisé en ce que la poudre est un alliage à base de Si comportant du cuivre.

4. Poudre selon l'une quelconque des revendications 1 à 3 caractérisé en ce que la granulométrie des particules est inférieure à 350 »m.

5. Procédé d'obtention de la poudre de l'une quelconque des revendications 1 à 4 caractérisé en ce que l'on part de lingots de Si que l'on concasse puis que l'on broye sous atmosphère peu réactive en présence d'une huile.

6. Procédé selon la revendication 5 caractérisé en ce que l'huile est un alcane, un ester, un corps gras ou une huile de silicone.

7. Procédé selon l'une quelconque des revendications 5 ou 6 caractérisé en ce que l'huile est ajoutée en une quantité comprise entre 0,1% et 0,5% (en poids).

8. Procédé selon l'une quelconque des revendications 5 ou 6 caractérisé en ce que l'atmosphère inerte est un mélange air-azote ou de l'azote.

9. Procédé d'obtention de la poudre de l'une quelconque des revendications 1 à 4 caractérisé en ce que on part de silicium liquide qu'on atomise sous vide ou dans un gaz peu réactif à pression inférieure à la pression atmosphérique.

10. Procédé selon la revendication 9 caractérisé en ce que le gaz peu réactif est de l'azote ou l'argon.

## Claims

1. A powder of metallurgical silicon or alloy based on metallurgical silicon having a low degree of surface oxidation characterised in that the constituent particles of said powder are covered with a surface layer of silica of at most 2 nm (20 Å) in thickness.

2. A powder according to claim 1 characterised in that the surface layer of silica is of a thickness of between 1 and 2 nm (10 and 20 Å).

3. A powder according to either one of claim 1 and 2 characterised in that the powder is an alloy based on Si containing copper.

4. A powder according to any one of claims 1 to 3 characterised in that the granulometry of the articles is smaller than 350 »m.

5. A process for producing the powder according to any one of claims 1 to 4 characterised in that the starting material used is ingots of Si and that they are broken up and then crushed in a substantially non-reactive atmosphere in the presence of an oil.

6. A process according to claim 5 characterised in that the oil is an alkane, an ester, a fatty substance or a silicone oil.

7. A process according to either one of claims 5 and 6 characterised in that the oil is added in an amount of between 0.1% and 0.5% (by weight).

8. A process according to either one of claim 5 and 6 characterised in that the inert atmosphere is an air-nitrogen mixture or nitrogen.

9. A process for the production of a powder according to any one of claim 1 to 4 characterised in that the starting material used is liquid silicon which is atomised under vacuum or in a gas which is substantially non-reactive at a pressure lower than atmospheric pressure.

10. A process according to claim 9 characterised in that the substantially non-reactive gas is nitrogen or argon.

## Patentansprüche

1. Pulver aus metallurgischem Silizium oder einer Legierung auf Basis metallurgischen Siliziums mit einer geringen oberflächlichen Oxidation,
dadurch gekennzeichnet,
daß die das Pulver bildenden Teilchen mit einer oberflächlichen Siliziumdioxidschicht von höchstens 2 nm (20 Å) Dicke bedeckt sind.

2. Pulver nach dem Anspruch 1,
dadurch gekennzeichnet,
daß die oberflächliche Siliziumdioxidschicht eine Dicke im Bereich von 1 bis 2 nm (10 bis 20 Å) hat.

3. Pulver nach irgendeinem der Ansprüche 1 oder 2,
dadurch gekennzeichnet,
daß das Pulver eine Kupfer enthaltende Legierung auf Siliziumbasis ist.

4. Pulver nach irgendeinem der Ansprüche 1 bis 3,
dadurch gekennzeichnet,
daß die Korngröße der Teilchen unter 350 »m ist.

5. Verfahren zur Herstellung des Pulvers nach irgendeinem der Ansprüche 1 bis 4,
dadurch gekennzeichnet,
daß man von Si-Blöcken ausgeht, die man grobzerkleinert und danach unter wenig reaktiver Atmosphäre in Gegenwart eines Öls mahlt.

6. Verfahren nach dem Anspruch 5,
dadurch gekennzeichnet,
daß das Öl ein Alkan, ein Ester, ein Fettkörper oder ein Siliconöl ist.

7. Verfahren nach irgendeinem der Ansprüche 5 oder 6,
dadurch gekennzeichnet,
daß das Öl in einer Menge im Bereich von 0,1 bis 0,5 (Gewichts-)% zugesetzt wird.

8. Verfahren nach irgendeinem der Ansprüche 5 oder 6,
dadurch gekennzeichnet,
daß die inerte Atmosphäre ein Luft-Stickstoff-Gemisch oder Stickstoff ist.

9. Verfahren zur Herstellung des Pulvers nach irgendeinem der Ansprüche 1 bis 4,
dadurch gekennzeichnet,
daß man von flüssigem Silizium ausgeht, das man unter Vakuum oder in einem wenig reaktiven Gas bei einem Druck unter dem atmosphärischen Druck versprüht.

10. Verfahren nach dem Anspruch 9,
dadurch gekennzeichnet,
daß das Wenig reaktive Gas Stickstoff oder Argon ist.
